# EUROPEAN PATENT SPECIFICATION

(11) **EP 2 166 902 B1**
(45) Date of publication and mention of the grant of the patent: **08.02.2012**
(21) Application number: 08762938.2
(22) Date of filing: 20.06.2008
(51) Int. Cl.: A47J 31/40

(54) **MIXER FOR A HOT BEVERAGE VENDING MACHINE**
MISCHER FÜR EINEN HEISSGETRÄNKEVERKAUFSAUTOMATEN
MÉLANGEUR POUR DISTRIBUTEUR AUTOMATIQUE DE BOISSON CHAUDE

(30) Priority: 10.07.2007 IT PN20070050
(43) Date of publication of application: 31.03.2010
(73) Proprietor: N&W Global Vending S.p.A., Valbrembo (IT)
(72) Inventor: SIRBU VILLA, Dan Alexie, I-24040 Bonate Sotto (IT)
(74) Representative: Jorio, Paolo
(86) International application number: PCT/IB2008/001627
(87) International publication number: WO 2009/007811

(56) References cited:
- DE-U1- 29 907 464
- US-A1- 2006 034 987

## Description

### TECHNICAL FIELD

The present invention relates to a hot beverage vending machine mixer for mixing a powdered product and hot water.

### BACKGROUND ART

Hot beverage vending machines are commonly used in offices, schools, hospitals, etc., are an ideal alternative to a bar, and are in the form of a structurally solid casing with a user interface defined by a panel with a digital beverage selection display, and an inner recess from which to withdraw the beverage. The beverages are normally homogenous liquids formed by dissolving a powdered product, such as cocoa or tea, in hot water, which are mixed and blended by means of a mixer.

Particular care must be taken over the mixer at the design stage to ensure a good-quality beverage and reliable long-term performance of the mixer. Other aspects to be taken into account are the manufacturing cost and routine maintenance and cleaning of the mixer, so it can be serviced and cleaned easily, even by unskilled personnel.

One solution to these problems is proposed in the italian Patent N° 1 305 512.

This patent describes a beverage vending machine mixer for mixing and blending a beverage product with hot water, and which comprises a mixing chamber with powdered product loading means; an injection tube; and a blending chamber underneath. The powdered product is loaded from a top container, and hot water is injected by an injection tube from a boiler adjacent to the mixing chamber. The powdered product loading means comprise a funnel-shaped hopper open at the top and bottom, and from which extends laterally a plate forming a box lid; and a box formed in one piece with a toroidal body supporting the hopper. The powdered product loading means are located over the mixing chamber, and are characterized by the steam from the hot water being collected, together with the more volatile portion of the powdered product escaping the mixing process, by light suction through an opening in the lid, and by virtue of a labyrinth path formed when the two powdered product loading means are fitted together. A blending chamber extends beneath the mixing chamber, and terminates at the front with an opening through which the hot beverage flows automatically by gravity to the outflow point. An impeller inside the blending chamber is powered by an electric motor to blend the two ingredients.

One drawback of this solution lies in the difficulty in servicing and cleaning the mixer, on account of the relatively large number of component parts of the mixer, and the necessity to remove the outflow tube at the front.

Another drawback lies in the way in which the beverage is dispensed, which is slow and effected purely by gravity, so that the mixer fills up and clogs when producing a large amount of beverage. Using a larger-capacity mixer to eliminate this drawback simply increases beverage outflow time.

### DISCLOSURE OF INVENTION

It is a main object of the present invention to provide a compact mixer with a minimum number of component parts.

Another object of the invention is to dispense the beverage faster and so prevent clogging when producing a large amount of beverage.

Last but not least, it is an object of the invention to provide a mixer for achieving the above at competitive cost, and which can be produced using ordinary known production means.

The accompanying Claims put in evidence some advantages which can be summed up as follows. The steam from the hot water, and the more volatile, intangible portion of the powdered product escaping the mixing process remain confined within the mixer, thus avoiding involving and fouling the rest of the machine.

The relative humidity in which the mixer is immersed can be controlled easily, e.g. by temperature control, to dispense the beverage more effectively and so prevent clogging of the mixer.

Moreover, routine servicing and cleaning are made easier by easy access to the mixer, which is designed for maximum compactness, with no fittings or hoses at the front.

The above aims and advantages, as well as others disclosed herein, are achieved by a hot beverage vending machine mixer for mixing a powdered product and hot water, as claimed in the main Claim and dependent Claims.

### BRIEF DESCRIPTION OF THE DRAWINGS

A non-limiting embodiment of the invention will be described by way of example with reference to the accompanying drawings, in which:
Figure 1 shows a simplified overall vertical section of a mixer enclosed inside a housing;
Figure 2 is a simplified side view showing the connection of an insertion interface to the mixer;
Figure 3 shows a view in perspective of the mixer and insertion interface;
Figure 4 shows a detail illustrating the inflow directions of the water jets;
Figure 5 shows a cross section along line D-D in Figure 2.

### BEST MODE FOR CARRYING OUT THE INVENTION

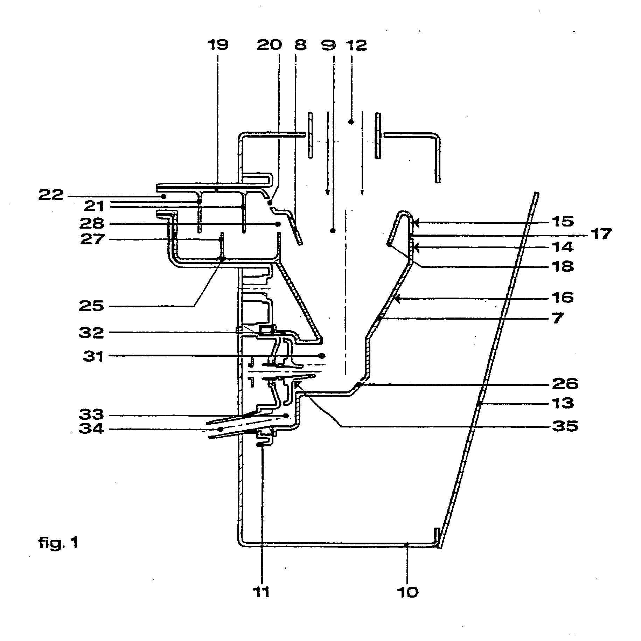

With reference to Figure 1, a soluble-beverage mixer 14 is enclosed inside a housing 10. This solution permits easy control of the relative humidity to which mixer 14 is subjected, e.g. by heating the environment, to dispense the beverage more effectively and prevent clogging of the system.

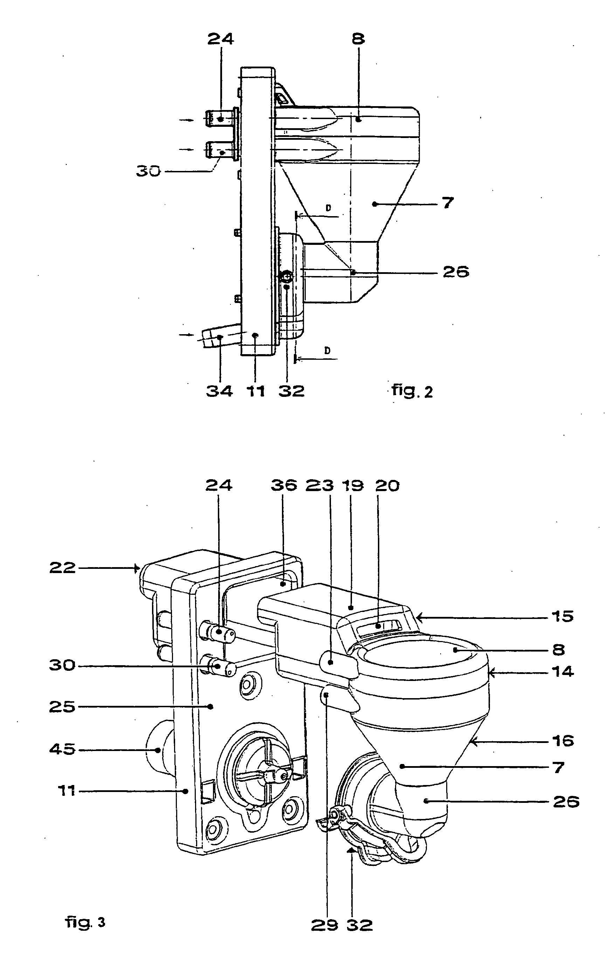

Housing 10 comprises a casing open at the rear (on the left in Figure 1) which closes onto, and is fitted by known means to, an insertion interface 11 (Figure 2) having the same rectangular section. Housing 10 has an inlet hole 12 at the top for loading the powdered product; and a door 13 at the front.

Mixer 14 comprises a suction chamber 15, and a mixing chamber 16.

Suction chamber 15 is defined by a one-piece body comprising an open-bottomed toroidal solid 8 having an outer circumferential edge 17 and an inner circumferential edge 18, which extends rearwards in the form of an open-bottomed prismatic solid 19. Prismatic solid 19 projects upwards with respect to toroidal solid 8 in the form of a curved front surface having the same radius of curvature as toroidal solid 8, and which has a rectangular suction opening 20 defining a first steam suction point over suction chamber 15.

A central hole 9 of toroidal solid 8 and inlet hole 12 of housing 10 are vertically coaxial.

The underside surface of prismatic solid 19 has a number of downward-extending vertical partitions 21.

Prismatic solid 19 terminates at the rear and top with the same diameter as outer circumferential edge 17 of toroidal solid 8, and has a projection defining an outlet 22 for connection to a suction system not shown.

As shown in Figure 3, the edge of toroidal solid 8 is connected tangentially to insertion interface 11 by a tubular fitting 23, into which a top hot-water injection tube 24 fits.

Mixing chamber 16 is defined by a one-piece body comprising a funnel-shaped solid 7, which extends at the top and rear inside a polygonal compartment 25 having an outer lateral surface matching that of prismatic solid 19, and extends axially at the bottom in the form of an elbow-shaped solid 26, the axis of which is perpendicular to the vertical axis of funnel-shaped solid 7.

Funnel-shaped solid 7 has a circumferential top opening of the same diameter as open-bottomed toroidal solid 8 to ensure perfect connection when suction chamber 15 and mixing chamber 16 are fitted together.

The vertical axis of funnel-shaped solid 7 is aligned with the vertical axes of inlet hole 12 of housing 10 and central hole 9 of toroidal solid 8. Aligning inlet hole 12 of housing 10 with central hole 9 of toroidal solid 8 and with the circumferential top opening of funnel-shaped solid 7 allows the powdered product to fall freely and vertically by gravity into a mixing chamber 31.

Polygonal compartment 25 has at least one upward-extending vertical partition 27.

Assembling suction chamber 15 to mixing chamber 16 connects prismatic solid 19 to polygonal compartment 25 to form a condensation chamber having a labyrinth inside formed by offsetting inner partitions 21 of the prismatic solid and inner partition 27 of the polygonal compartment. The condensation chamber is connected to funnel-shaped solid 7 by a suction opening 28 defining a second suction point for the steam produced inside mixing chamber 16.

As shown in Figure 3, the edge of funnel-shaped solid 7 is connected tangentially to insertion interface 11 by a tubular fitting 29, into which a bottom hot-water injection tube 30 fits. Fitting 29 connecting funnel-shaped solid 7 to insertion interface 11 is located below and parallel to fitting 23 connecting toroidal solid 8 to insertion interface 11, and the axes of both fittings are perpendicular to the vertical axis of funnel-shaped solid 7.

Elbow-shaped solid 26 defines a mixing chamber 31, and terminates at the rear with a flared concentric portion 32 defining, at the bottom, a beverage outflow chamber 33 connected to an outflow tube 34 extending rearwards of mixer 14.

Concentric portion 32 of the elbow-shaped solid is connected by ordinary fastening means to insertion interface 11.

A mixing impeller 35, powered by a motor 45 (Figure 3), is interposed between mixing chamber 31 and outflow chamber 33; and outflow chamber 33 is located radially with respect to the seat of impeller 35, so that the system comprising mixing chamber 31, impeller 35, and outflow chamber 33 forms a sort of tangential pump.

Water is injected by top and bottom injection tubes 24 and 30, each of which is connected to a respective independent feed circuit, and preferably terminates with a double nozzle to feed water faster into the mixer.

With reference to Figure 3, insertion interface 11, fixed to the structure of the machine (not shown), is connected to all the parts extending rearwards of mixer 14. For which purpose, insertion interface 11 has a rear recess 36, into which the condensation chamber formed by connecting prismatic solid 19 to polygonal compartment 25 fits; and a hole at the bottom for fluidtight passage of the shaft of the motor powering impeller 35.

As can be seen, the various parts in Figure 3 are geometrically simple, and can be connected compactly, with no need for hoses or fittings at the front of mixer 14. This feature, together with the front door 13 of housing 10, provides for easy access to the inside of the structure for routine servicing and cleaning, and also saves disconnecting outflow tube 34 when dismantling the system.

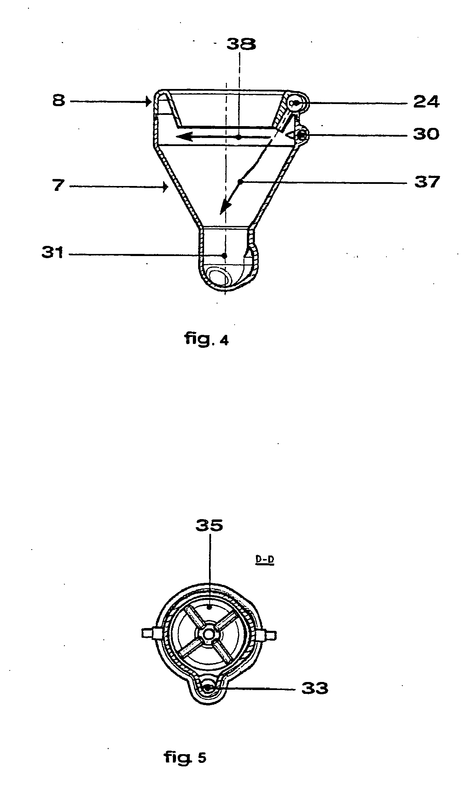

The detail section in Figure 4 shows the inflow directions of the hot-water jets into mixer 14. The powdered product, regulated by a metering device not shown, falls freely and axially by gravity from inlet hole 12 of housing 10 into mixer 14. As the powdered product reaches mixing chamber 31, the nozzle of top injection tube 24 injects hot water directly into mixing chamber 31 in a direction 37 obliquely intersecting the axis of mixing chamber 16. At the same time, the nozzle of bottom injection tube 30 injects hot water tangentially in a direction 38 into mixing chamber 16, so as to intercept the powdered product and also assist in the mixing process. The nozzle of bottom injection tube 30 is aimed to inject water over the entire inner surface of mixing chamber 16, so no powdered product remains inside mixer 14.

The more volatile, intangible portion of the powdered product escaping the mixing process is intercepted by the steam produced by the hot water from both injection tubes 24, 30. The mixer being enclosed inside housing 10, the steam is confined to mixer 14, and, by virtue of the two-point suction system, is sucked out completely, is condensed inside the condensation chamber, along the labyrinth formed by partitions 21, 27 in the condensation chamber, and is deposited inside polygonal compartment 25, so the rest of the machine remains clean.

Injecting water along two independent hydraulic circuits, together with the two-point suction system, ensures adequate hot water flow into mixer 14.

Figure 5 shows a cross section of impeller 35 and outflow chamber 33.

Mixing of the ingredients is completed by impeller 35, and commences as soon as the hot water injected by top and bottom injection tubes 24, 30, and the powdered product from inlet hole 12 of housing 10 reach mixing chamber 31. The beverage is dispensed more effectively by virtue of the pump effect produced, as described above, by the particular location of mixing chamber 31, outflow chamber 33, and impeller 35, and is fed to the outflow point along rear outflow tube 34. The pump effect also compensates for the larger amount of hot water injected by the two double-nozzle injection tubes 24, 30, thus preventing clogging of mixer 14.

The radial position of outflow chamber 33 with respect to impeller 35 has the effect of breaking up swirl of the beverage produced by the spin of impeller 35, so that the beverage flows out more smoothly.

The system according to the invention therefore achieves the aims proposed. In particular, it provides for fast outflow of the beverage, so a large quantity can be produced without filling or clogging mixer 14, and with no need for a larger-capacity mixing chamber 16. Clearly, changes may be made to the invention, and the invention put to various uses, without, however, departing from the protective scope as defined in the claims of the present application ; and the dimensions, materials, and parts employed may be those most suitable for specific requirements.

## Claims

1. A hot beverage vending machine mixer (14) for mixing a soluble product and water, and comprising: a powdered-product-loading and steam-extracting chamber (15); a mixing chamber (16), the bottom (31) of which is fitted with powered mixing means (35); injection means (24, 30) for injecting water into the mixing chamber (16); and beverage outflow means (34); **characterized in that** a first injection means (24) injects water directly onto the bottom (31) of the mixing chamber (16); and a second injection means (30) injects water tangentially into the top of the mixing chamber (16); the mixing means being located between the bottom (31) of the mixing chamber (16) and an outflow chamber (33), from which the outflow means (34) extend.

2. A hot beverage vending machine mixer (14) for mixing a soluble product and water, as claimed in Claim 1, wherein steam is extracted from a first suction point (20) over the mixer (14), and from a second suction point (28) inside the mixer (14).

3. A hot beverage vending machine mixer (14) for mixing a soluble product and water, as claimed in Claim 1, wherein the outflow chamber (33) is positioned radially beneath the mixing means (35).

4. A hot beverage vending machine mixer (14) for mixing a soluble product and water, as claimed in Claim 1, wherein the outflow means (34) extend rearwards with respect to the mixer (14).

5. A hot beverage vending machine mixer (14) for mixing a soluble product and water, as claimed in Claim 1, wherein the mixer (14) is enclosed in a housing (10) having a door (13).

## Patentansprüche

1. Mischer (14) für einen Heißgetränkeverkaufsautomaten zum Mischen von einem löslichen Produkt und Wasser, und umfassend: eine Kammer (15) zur Beaufschlagung mit pulverförmigem Produkt und zur Dampfextraktion; eine Mischkammer (16), deren Boden (31) mit angetriebenen Mischmitteln (35) ausgerüstet ist; Einspritzmittel (24, 30) zum Einspritzen von Wasser in die Mischkammer (16); und Ausflussmittel (34) für Getränke; **dadurch gekennzeichnet dass** ein erstes Einspritzmittel (24) Wasser unmittelbar auf den Boden (31) der Mischkammer (16) einspritzt; und ein zweites Einspritzmittel (30) Wasser tangential in die Oberseite der Mischkammer (16) einspritzt; wobei die Mischmittel sich zwischen dem Boden (31) der Mischkammer (16) und einer Ausflusskammer (33) befinden, aus welcher heraus die Ausflussmittel (34) sich erstrecken.

2. Mischer (14) für einen Heißgetränkeverkaufsautomaten zum Mischen von einem löslichen Produkt und Wasser gemäß Anspruch 1, wobei Dampf aus einem ersten Ansaugpunkt (20) über dem Mischer (14) und aus einem zweiten Ansaugpunkt (28) innerhalb des Mischers (14) extrahiert wird.

3. Mischer (14) für einen Heißgetränkeverkaufsautomaten zum Mischen von einem löslichen Produkt und Wasser gemäß Anspruch 1, wobei die Ausflusskammer (33) sich radial unterhalb der Mischmittel (35) befindet.

4. Mischer (14) für einen Heißgetränkeverkaufsautomaten zum Mischen von einem löslichen Produkt und Wasser gemäß Anspruch 1, wobei die Ausflussmittel (34) sich in Bezug auf den Mischer (14) nach hinten erstrecken.

5. Mischer (14) für einen Heißgetränkeverkaufsautomaten zum Mischen von einem löslichen Produkt und Wasser gemäß Anspruch 1, wobei der Mischer (14) in einem Gehäuse (10) eingeschlossen ist, das eine Tür (13) aufweist.

## Revendications

1. Mélangeur (14) de distributeur automatique de boisson chaude pour mélanger un produit soluble et de l'eau, et comprenant : une chambre de chargement de produit en poudre et d'extraction de vapeur (15) ; une chambre de mélange (16), dont le fond (31) est équipé de moyens de mélange motorisés (35) ; des moyens d'injection (24, 30) pour injecter l'eau dans la chambre de mélange (16) ; et de moyens de sortie de boisson (34) ; **caractérisé en ce qu'**un premier moyen d'injection (24) injecte de l'eau directement sur le fond (31) de la chambre de mélange (16) ; et un deuxième moyen d'injection (30) injecte de l'eau de manière tangentielle dans la partie supérieure de la chambre de mélange (16) ; les moyens de mélange étant positionnés entre le fond (31) de la chambre de mélange (16) et une chambre de sortie (33), à partir de laquelle les moyens de sortie (34) s'étendent.

2. Mélangeur (14) de distributeur automatique de boisson chaude pour mélanger un produit soluble et de l'eau selon la revendication 1, dans lequel de la vapeur est extraite à partir d'un premier point d'aspiration (20) sur le mélangeur (14), et à partir d'un deuxième point d'aspiration (28) à l'intérieur du mélangeur (14).

3. Mélangeur (14) de distributeur automatique de boisson chaude pour mélanger un produit soluble et de l'eau selon la revendication 1, dans lequel la chambre de sortie (33) est positionnée de manière radiale au-dessous des moyens de mélange (35).

4. Mélangeur (14) de distributeur automatique de boisson chaude pour mélanger un produit soluble et de l'eau selon la revendication 1, dans lequel les moyens de sortie (34) s'étendent vers l'arrière par rapport au mélangeur (14).

5. Mélangeur (14) de distributeur automatique de boisson chaude pour mélanger un produit soluble et de l'eau selon la revendication 1, dans lequel le mélangeur (14) est enfermé dans un boîtier (10) comprenant une porte (13).
